# EUROPEAN PATENT SPECIFICATION

(11) **EP 0 835 784 B1**
(45) Date of publication and mention of the grant of the patent: **18.12.2002**
(21) Application number: 97203042.3
(22) Date of filing: 03.10.1997
(51) Int. Cl.: B60Q 1/06, B60Q 1/26

(54) **Construction of automotive vehicle cab.**
Fahrzeugkabine
Cabine de véhicule automobile

(30) Priority: 10.10.1996 IT BO960508
(43) Date of publication of application: 15.04.1998
(73) Proprietor: NEW HOLLAND ITALIA S.p.A., I-41100 Modena (IT)
(72) Inventor: Lavecchia, Guido A., Bologna (IT); Strong, Russell W., Craftsbury Commons, Vermont 95827 (US)
(74) Representative: Vandenbroucke, Alberic

(56) References cited:
- DE-A- 3 402 824
- US-A- 5 546 286

## Description

The present invention relates to a cab construction of an automotive vehicle, such as an agricultural tractor.

Farm vehicles or tractors are known to be used for towing machinery or transporting equipment. Conventionally these tractors comprise front and rear lights for providing illumination in the environment of the vehicle, which lights are normally fitted to the engine hood at the vehicle nose and/or to-the cab. When cab-mounted, a pair of lights is normally fitted directly to the sloping front and rear portions of the roof covering the top of the windshield and rear window via the interposition of articulated supports enabling the light beam to be directed as required.

In US-A-5.546.286, a skid steer loader with a cab according to the preamble of claim 1, is shown having its lights mounted in the corners between the upstanding cab pillars and the connecting cross members. Although the lights project outwardly from the confines of the roof and thus may be prone to accidental impacts, it nevertheless is noted that vehicles of this sort inherently have a limited height, making them less vulnerable in the roof area.

However, since in a front and rear installation such as the ones described above each light/support assembly constitutes a projection limiting the visibility of the operator, some manufacturers have thought fit to install the lights on top of the roof, i.e. out of sight of the operator.

As is known, vehicles in the agricultural field are used in various environments or work places, e.g. tree plantations, in which the tractor may run into projecting bodies, such as the branches of trees, which, entangled in the lights or respective supports may damage the lights or may exert a substantial elastic external stress on the cab preventing free forward movement of the vehicle. The lights or respective supports therefore act as points at which stress is applied in opposition to the forward movement of the vehicle, and the' mechanical resistance of the lights or supports to such stress depends on the way they are constructed. The problem obviously could be solved by simply reducing the size of the cab, but a small cab not only would limit the working space of the operator but also would have a negative influence on visibility since the size of the windshield and rear window would be reduced. Moreover, as the distribution in space and the size and mechanical characteristics of obstacles are impossible to predict, simply reducing the height of the cab fails to provide a real solution to the problem.

In the embodiment described in DE-A-3.402.824, the disadvantages of having the lights mounted on top of the roof are somewhat attenuated by providing light housings which gradually flow over in the top surface of the roof, and as such reduce wind resistance when driving. Although this could be an acceptable solution for a truck, driving exclusively along the road and having no immediate limitation to the cab height, it is not acceptable for an agricultural tractor, as already mentioned above, to increase the cab height, even if the lights are partially incorporated in the roof structure.

It is therefore an object of the present invention to provide an automotive vehicle cab designed to overcome the aforementioned drawbacks, and more specifically a vehicle cab having no projections nor obstacles impairing the view of the operator.

According to the present invention, a cab for an automotive vehicle is provided; said cab comprising :
- a frame comprising a number of substantially vertical posts and a number of connecting cross members, each extending and maintaining a constant distance between two adjacent posts;
- a front wall and a rear wall which are supported on said frame;
- a roof of given shape and supported on said frame for closing the top of said cab; and
- lighting means for external illumination comprising at least one light located beneath said roof.

The cab is characterized in that at least one of said connecting cross members comprises at least one seat; said at least one seat being incorporated in said at least one connecting cross member close to one of said vertical posts and having a peripheral edge of a given shape for substantially housing said at least one light.

A vehicle cab in accordance with the present invention will now be described in greater detail, by way of example, with reference to the accompanying drawings, in which :
Figure 1 shows a schematic view in perspective, with parts removed for clarity, of a cab in accordance with the present invention;
Figure 2 shows a larger-scale rear view in perspective of a detail in Figure 1;
Figure 3 shows a larger-scale front view in perspective, with parts removed for clarity, of Figure 1; and
Figure 4 shows a larger-scale rear view in perspective, with parts removed for clarity, of Figure 1.

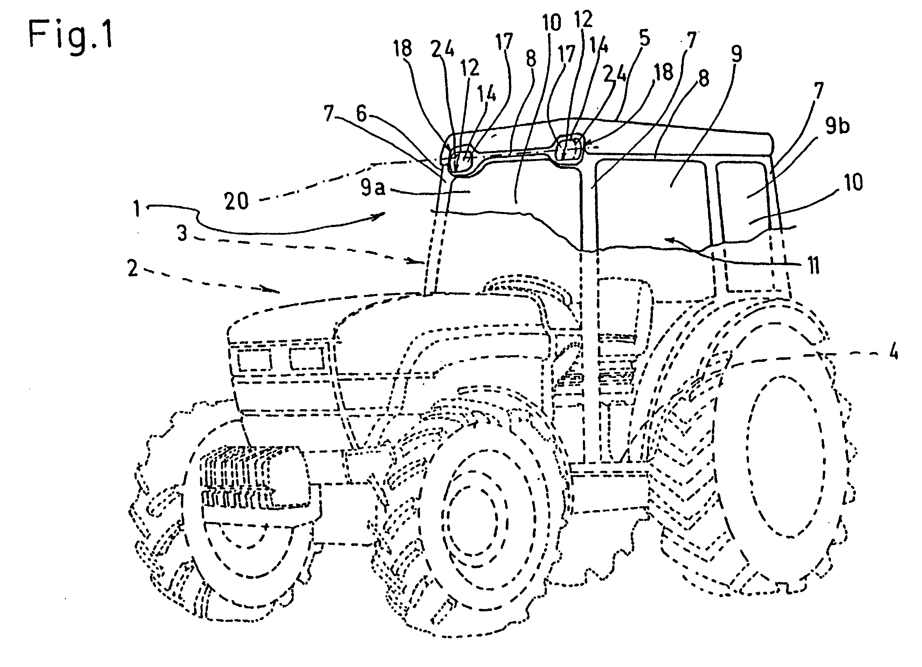

Reference number 1 in Figure 1 indicates a cab for an automotive vehicle 2, in particular a tractor. Cab 1 comprises a driver compartment 3 defined at the bottom by a substantially rectangular floor 4, and closed at the top by a substantially rectangular roof 5. Roof 5 is fitted to a supporting structure 6 extending upwards from floor 4, and comprising four vertical posts or pillars 7, each located at a respective corner of floor 4 and maintained at a fixed distance from the other posts by connecting cross members 8, each of which connects the top end portions of two posts 7 of two adjacent corners of floor 4.

Compartment 3 is defined laterally by walls 9, each of which comprises a highly resistible panel 10 of transparent material, and is fitted laterally to two posts 7 and to the cross member 8 in between. In each lateral wall 9, cab 1 conventionally comprises a door 11 hinged to a respective front post 7 in order to permit passage of the driver of vehicle 2 in and out of compartment 3.

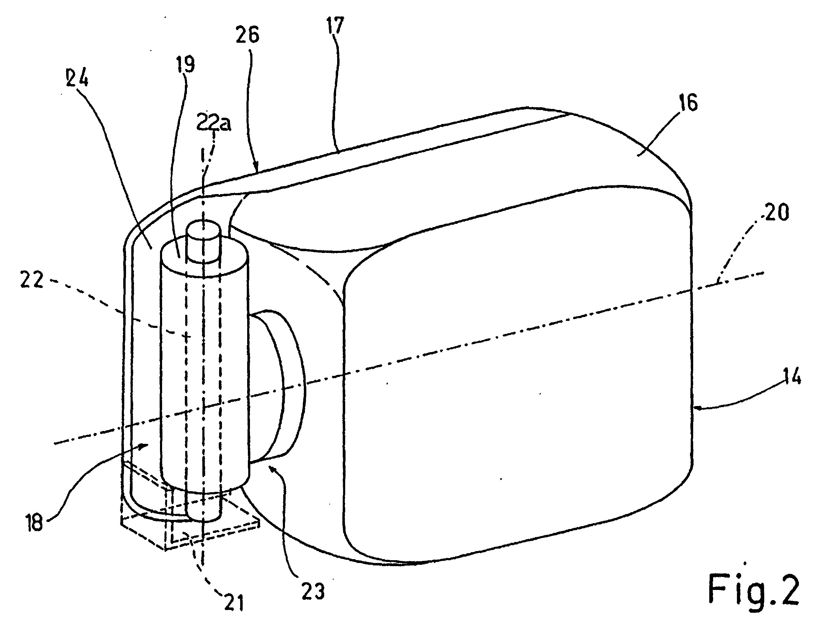

As shown in Figures 1 and 2, each front and rear cross member 8 comprises, close to each of the respective posts 7, a seat 12 substantially housing a manually or electrically orientable light 14 for illuminating the area around vehicle 2. To enable the provision of the seat 12, cross member 8 presents a larger surface in the immediate vicinity of the posts 7 when compared to the middle portion of said cross member 8.

Light 14 comprises a hollow, parallelepiped, body 16 with rounded corners housing a known lighting assembly (not shown), which in turn comprises a known parabolic reflecting body or so-called "parabola" (not shown), and at least one known bulb (not shown) located at the focus of the parabola. Light 14 further comprises a cover 17 for closing body 16, protecting the lighting assembly, and diffusing the light emitted by the bulb and the light reflected by the parabola. On the side facing a respective post 7, each body 16 comprises a fastening member 18 in turn comprising a sleeve 19, which rotates about an axis 20, extends vertically across a respective seat 12, and is concealed by cover 17. Seat 12 further comprises an inner L-shaped bracket 21, a horizontal portion of which rigidly supports a vertical pin 22 engaged in a freely rotating or selectively fixed manner by sleeve 19. Bracket 21 and fastening member 18 therefore together define a hinge 23 by which to orient light 14 about two perpendicular axes, namely vertical axis 22a of pin 22 and axis 20.

Diffusing cover 17 comprises a projection extending laterally (in an outward direction in Figure 2) with respect to body 16, and defining a handle 24 by which to manually orient as required the light emitted by light 14.

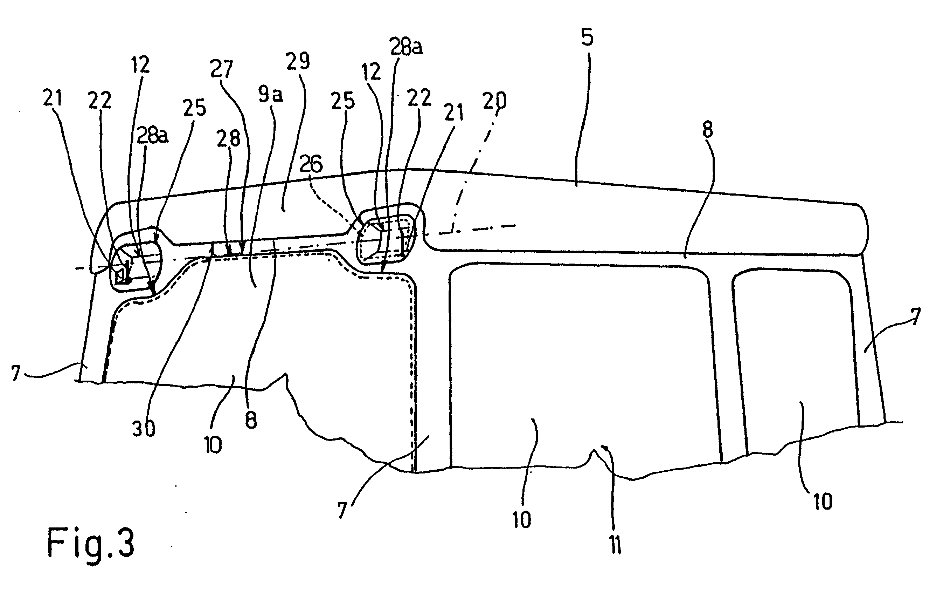

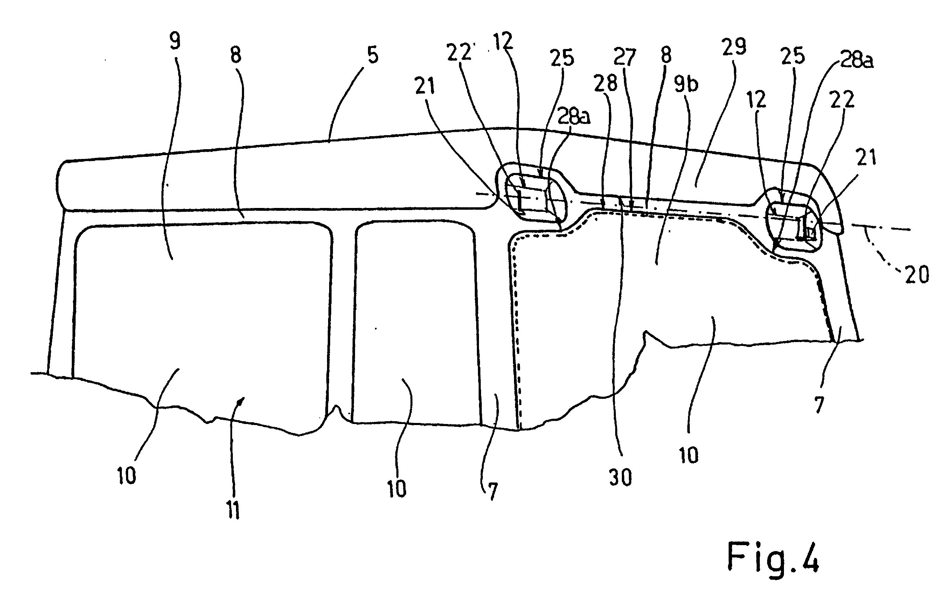

Seat 12 and cover 17 are defined laterally by respective geometrically similar edges 25 and 26 (Figures 3 and 4), and, as shown clearly in Figures 1 and 2, are in the form of a rectangle with rounded corners. In particular, the boundary of edge 25 is sufficiently greater than that of edge 26 to ensure that light 14, however oriented, is housed completely inside seat 12.

Panel 10 defining the front wall 9a is connected rigidly to the corresponding cross member 8, and is defined at the top by a free edge 27 comprising a central portion 28 between respective seats 12, and two lateral portions 28a located on either side of and below central portion 28, and each of which is located beneath a respective seat 12 and reproduces the bottom portion of edge 25 of seat 12.

As shown in Figure 4, panel 10 defining the rear wall 9b is substantially identical to that defining wall 9a, and is therefore rigidly connected to a corresponding rear cross member 8. The rear panel 10 is defined at the top by a free edge 27 substantially identical to that of panel 10 of front wall 9a, and as such comprises a central portion 28 between respective seats 12, and two lateral portions 28a located on either side of and below central portion 28, and each of which is located beneath a respective seat 12 and reproduces the bottom portion of edge 25 of seat 12.

Each one of the front and rear cross members 8 is shaped such as to position central portion 28 of edge 27 as close as possible to the roof 5, to thereby provide for greater upward visibility both at the front and rear of the vehicle 2.

As shown in Figures 3 and 4, the roof 5 comprises two sloping panels 29, one each at the front and rear, for protecting the connection between respective walls 9 and cross members 8 so as to prevent the ingression of water into the interior of cab 1. Each panel 29 is defined at the bottom by a free edge 30 shaped substantially symmetrically with edge 27 in relation to axis 20, so that the light emitted by the lights 14, however oriented, freely illuminates the space ahead of the covers 17 without encountering any obstacles, by virtue of edges 30 and 27 being located respectively above and below the lights 14.

The advantages of a cab 1 constructed in accordance with the foregoing description will be clear to a person skilled in the art, without any further detailed explanation being required. It suffices to say that, each light 14 being housed entirely inside a respective seat 12, and each cover 17 being flush with a respective wall 9, cab 1 is ideal for use in woody environments, and in particular between rows of trees, the lower branches of which may stretch across the path of cab 1, thus impeding free forward travel of vehicle 2. The absence of any projections, such as the lights, aids the free forward travel of vehicle 2 by enabling the branches to slide over walls 9 or roof 5 without interfering in any way with the lights 14, which therefore remain functionally intact and in the exact position as selected by the driver.

A further advantage of cab 1 as described above is that the particular shape of front and rear cross members 8 and walls 9a and 9b allows for positioning central portion 28 of edge 27 close to edge 30 of roof 5, thus greatly increasing the visibility of the driver seated inside cab 1 without having to raise the cab roof 5. The driver is not hindered significantly by the lateral portions of the cross members 8 in which the seats 12 are housed and which lie somewhat lower than the central portions of said cross members 8, in as much as said lateral portions extend laterally inwardly from the posts 7 only over a limited distance. Consequently, the central, raised portions of the cross members 8 do not obstruct the driver's view, which is particularly advantageous not only during normal drive with the tractor but also when carrying out precision work with a front or rear mounted loader.

## Claims

1. A cab (1) for an automotive vehicle (2); said cab (1) comprising :
- a frame (6) comprising a number of substantially vertical posts (7) and a number of connecting cross members (8), each extending and maintaining a constant distance between two adjacent posts (7);
- a front wall (9a) and a rear wall (9b) which are supported on said frame;
- a roof (5) of given shape and supported on said frame (6) for closing the top of said cab (1); and
- lighting means (14) for external illumination comprising at least one light (14) located beneath said roof (5); and
**characterized in that** at least one of said connecting cross members (8) comprises at least one seat (12); said at least one seat (12) being incorporated in said at least one connecting cross member (8) close to one of said vertical posts (7) and having a peripheral edge (25) of a given shape for substantially housing said at least one light (14).

2. A cab according to claim 1 **characterized in that** at least one of said front (9a) and rear (9b) walls comprises, at the side facing a corresponding cross member (8), a shaped upper edge (27), one portion (28a) of which approximates a corresponding portion of said peripheral edge (25) to partially define said seat (12).

3. A cab according to claim 1 or 2 **characterised in that** at least one of said connecting cross members (8) comprises two seats (12); each seat (12) being located close to a vertical post (7).

4. A cab according to claim 3 **characterized in that** said at least one cross member (8) comprises a central portion extending between said two seats (12) and having a lower edge which extends upwardly relative to the lowermost portions of said peripheral edges (25) of said seats (12).

5. A cab according to claim 4 **characterized in that** said central portion of said at least one cross member (8) is contiguous to an upper, central portion (28) of the shaped upper edge (27) of a corresponding front or rear wall (9a, 9b).

6. A cab according to claim 4 or 5 **characterized in that** said lower edge of the central portion of said at least one cross member (8) approximately coincides with a horizontal axis (20) extending centrally through said two seats (12).

7. A cab according to claim 2 and any claim dependent thereto **characterized in that** said roof (5) comprises sloping panels (29) respectively covering the top of said front and rear walls (9a, 9b) to protect said front and rear walls (9a, 9b) from infiltration by water or other similar fluid; each of said sloping panels (29) having a lower edge (30) terminating above said upper edge (27) and being substantially symmetrical thereto relative to the axis (20) to enable said light (14) to freely illuminate the space ahead thereof.

8. A cab according to claim 2 and any claim dependent thereto **characterized in that** said light (14) comprises a parabola supporting body (16) of given shape and defined at the front by a diffusing cover (17) so shaped as to project laterally with respect to said parabola supporting body (16); said portion (28a) of said lateral edge (27) reproducing on a larger scale the shape of said diffusing cover (17); and said seat (12) being shaped in a manner as to completely house said parabola supporting body (16) and said diffusing cover (17).

9. A cab according to any of the preceding claims **characterized in that** said frame (6) comprises a bracket (21) which is housed inside a respective said seat (12) to support a corresponding light (14); said light (14) comprising articulated means (19) for attachment to said frame (6), and at least one projecting element (24) acting as a handle by which to so orient the light (14) with respect to the seat (12) as to illuminate a given localized area.

10. A cab according to claim 9 **characterized in that** said articulated means (19) are arranged such as to rotate freely in a selectively fixable manner about said horizontal axis (20) of said seat (12), and comprise a sleeve (19) connected to said parabola supporting body (16) for rotation around a vertical axis (22a).

## Patentansprüche

1. Kabine (1) für ein Kraftfahrzeug (2), wobei die Kabine (1) folgendes umfaßt:
- einen Rahmen (6), der eine Anzahl von im wesentlichen vertikalen Säulen (7) und eine Anzahl von Verblndungs-Querteilen (8) umfaßt, die sich jeweils zwischen zwei benachbarten Säulen (7) erstrecken und diese auf einem konstanten Abstand halten,
- eine Vorderwand (9a) und eine Rückwand (9b), die auf dem Rahmen gehaltert sind,
- ein Dach (5) mit vorgegebener Form, das auf dem Rahmen (6) gehaltert ist, um die Oberseite der Kabine (1) abzuschließen, und
- Beleuchtungseinrichtungen (14) zur externen Beleuchtung, die zumindest eine Lampe 14 umfassen, die unter dem Dach (5) liegt, und
**dadurch gekennzeichnet, daß** zumindest eines der Verbindungs-Querteile (8) zumindest einen Sitz (12) umfaßt, wobei der zumindest eine Sitz (12) in das zumindest eine Verbindungs-Querteil (8) nahe an einer der vertikalen Säulen (7) eingefügt ist und eine Umfangskante (25) mit vorgegebener Form aufweist, um die zumindest eine Lampe (14) im wesentlichen zu umgeben.

2. Kabine nach Anspruch 1, **dadurch gekennzeichnet, daß** zumindest eine der Vorderwände (9a) und Rückwände (9b) auf der auf ein entsprechendes Querteil (8) gerichteten Seite eine geformte Oberkante (27) aufweist, von der ein Teil (28a) einem entsprechenden Teil der Umfangskante (25) angenähert ist, um teilweise den Sitz (12) zu begrenzen.

3. Kabine nach Anspruch 1 oder 2, **dadurch gekennzeichnet, daß** das zumindest eine der Verbindungs-Querteile (8) zwei Sitze (12) umfaßt, und daß jeder Sitz (12) an einer vertikalen Säule (7) liegt.

4. Kabine nach Anspruch 3, **dadurch gekennzeichnet, daß** das zumindest eine Querteil (8) einen Mittelabschnitt aufweist, der sich zwischen den zwei Sitzen (12) erstreckt und eine Unterkante aufweist, die sich gegenüber den untersten Abschnitten der Umfangskanten (25) der Sitze (12) nach oben erstreckt.

5. Kabine nach Anspruch 4, **dadurch gekennzeichnet, daß** der Mittelabschnitt des zumindest einen Querteils (8) angrenzend zu einem oberen Mittelabschnitt (28) der geformten Oberkante (27) einer entsprechenden Vorder-oder Rückwand (9a,9b) ist.

6. Kabine nach Anspruch 4 oder 5, **dadurch gekennzeichnet, daß** die Unterkante des Mittelabschnitts des zumindest einen Querteils (8) angenähert mit einer horizontalen Achse (20) zusammenfällt, die sich mittig durch die beiden Sitze (12) erstreckt.

7. Kabine nach Anspruch 2 und irgendeinem hierauf zurückbezogenen Anspruch, **dadurch gekennzeichnet, daß** das Dach (5) geneigte Platten (29) umfaßt, die im wesentlichen die Oberseite der Vorder- und Rückwände (9a,9b) bedecken, um die Vorder- und Rückwände (9a,9b) gegen den Eintritt von Wasser und anderen ähnlichen Flüssigkeiten zu schützen, wobei jede der geneigten Platten (29) eine Unterkante (30) aufweist, die oberhalb der Oberkante (27) endet und im wesentlichen symmetrisch hierzu bezüglich der Achse (20) ist, um es zu ermöglichen, daß die Lampe (14) frei den Raum vor dieser beleuchtet.

8. Kabine nach Anspruch 2 und irgendeinem hierauf zurückbezogenen Anspruch, **dadurch gekennzeichnet, daß** die Lampe (14) einen einen Parabolspiegel halternden Körper (16) mit vorgegebener Form umfaßt, der an der Vorderseite durch eine Streuabdeckung (17) begrenzt ist, die so geformt ist, daß sie seitlich bezüglich des den Parabolspiegel tragenden Körpers (16) vorspringt, wobei der Abschnitt (28a) der Seitenkante (27) in größerem Maßstab die Form der Streuabdeckung (17) wiedergibt, und wobei der Sitz (12) in einer derartigen Weise geformt ist, daß er vollständig den den Paralbolspiegel tragenden Körper (16) und die Streuabdeckung (17) aufnimmt.

9. Kabine nach einem der vorhergehenden Ansprüche, **dadurch gekennzeichnet, daß** der Rahmen (6) einen Haltebügel (21) umfaßt, der im Inneren eines jeweiligen der Sitze (12) angeordnet ist, um eine entsprechende Lampe (14) zu haltern, wobei die Lampe (14) Gelenkeinrichtungen (19) zur Befestigung an dem Rahmen (6) und zumindest ein vorspringendes Element (24) umfaßt, das als ein Handgriff wirkt, mit dem die Lampe (14) bezüglich des Sitzes (12) ausrichtbar ist, um einen vorgegebenen, örtlich begrenzten Bereich zu beleuchten.

10. Kabine nach Anspruch 9, **dadurch gekennzeichnet, daß** die Gelenkeinrichtungen (19) so angeordnet sind, daß sie frei drehbar in einer selektiv festlegbaren Weise um die horizontale Achse (20) des Sitzes (12) drehbar sind und eine Hülse (19) umfassen, die mit dem den Parabolspiegel tragenden Körper (16) für eine Drehung um eine vertikale Achse (22a) verbunden ist.

## Revendications

1. Une cabine (1) pour un véhicule automoteur (2); ladite cabine (1) comprenant:
- un châssis (6) possédant un certain nombre de montants substantiellement verticaux (7) et un certain nombre de traverses de liaison (8), s'étendant sur une distance constante entre deux montants adjacents (7) et assurant le maintien de cette distance;
- une paroi avant (9a) et une paroi arrière (9b) soutenue sur ledit châssis;
- un toit (5) d'une forme donnée et soutenu par ledit châssis (6) pour obturer le sommet de ladite cabine (1); et
- des moyens d'éclairage (14) destinés à un éclairage extérieur comprenant au moins un unique phare (14) situé sous ledit toit (5); et
**caractérisée en ce qu'**au moins une desdites traverses de liaison (8) comprend au moins un logement (12); ledit au moins unique logement (12) étant incorporé dans ladite au moins unique traverse de liaison (8) à proximité d'un desdits montants verticaux (7) et possédant un bord périphérique (25) d'une forme donnée destiné à abriter substantiellement ledit au moins unique phare (14).

2. Cabine selon la revendication 1, **caractérisée en ce qu'**au moins une desdites parois avant (9a) et arrière (9b) comprend, sur la face adjacente à une traverse (8) correspondante, un bord supérieur conformé (27), dont une partie (28a) se rapproche d'une partie correspondante dudit bord périphérique (25) pour définir partiellement ledit logement (12).

3. Cabine selon la revendication 1 ou 2, **caractérisée en ce qu'**au moins une desdites traverses (8) comprend deux logements (12); chaque logement (12) étant situé à proximité d'un montant vertical (7).

4. Cabine selon la revendication 3, **caractérisée en ce que** ladite au moins unique traverse (8) comprend une partie centrale s'étendant entre lesdits deux logements (12) et possédant un bord inférieur qui s'étend vers le haut par rapport aux parties inférieures desdits bords périphériques (25) desdits logements (12).

5. Cabine selon la revendication 4, **caractérisée en ce que** ladite partie centrale de ladite au moins unique traverse (8) est contiguë d'une partie centrale supérieure d'une paroi avant ou arrière (9a, 9b) correspondante.

6. Cabine selon la revendication 4 ou 5, **caractérisée en ce que** ledit bord inférieur de la partie centrale de ladite au moins unique traverse (8) coïncide approximativement avec l'axe horizontal (20) s'étendant par le centre desdits deux logements (12).

7. Cabine selon la revendication 2 et une quelconque revendication s'y rapportant, **caractérisée en ce que** ledit toit (5) comprend des panneaux inclinés (29) recouvrant respectivement le sommet desdites parois avant et arrière (9a, 9b) pour protéger lesdites parois avant et arrière (9a, 9b) de l'infiltration d'eau ou d'autre fluide similaire; chacun desdits panneaux inclinés (29) possédant un bord inférieur (30) se terminant au-dessus dudit bord supérieur (27) et lui étant substantiellement symétrique par rapport à l'axe (20) pour permettre audit phare (14) d'éclairer librement l'espace situé face à lui.

8. Cabine selon la revendication 2 et une quelconque revendication s'y rapportant, **caractérisée en ce que** ledit phare (14) comprend un corps (16) de soutien de parabole d'une forme donnée et défini à l'avant par une coiffe de diffusion (17) conformée de manière telle à se prolonger latéralement par rapport au corps (16) de soutien de parabole; ladite partie (28a) dudit bord latéral (27) reproduisant à une échelle plus élevée la forme de ladite coiffe de diffusion (17); et ledit logement (12) étant conformé de manière à abriter complètement le corps (16) de soutien de parabole et ladite coiffe de diffusion (17).

9. Cabine selon l'une quelconque des revendications précédentes, **caractérisée en ce que** ledit châssis (6) comprend un support (21) abrité à l'intérieur d'undit logement respectif (12) pour soutenir un phare correspondant (14); ledit phare (14) comprenant des moyens articulés (19) de liaison audit châssis (6), et au moins un élément en saillie (24) agissant comme une poignée pour orienter avec celle-ci le phare (14) par rapport au logement (12) afin d'éclairer une zone localisée donnée.

10. Cabine selon la revendication 9, **caractérisée en ce que** lesdits moyens articulés (19) sont disposés de manière à tourner librement d'une manière sélectivement immobilisable autour dudit axe horizontal (20) dudit logement (12), et comprend un manchon (19) relié audit corps (16) de soutien de parabole afin de tourner autour d'un axe vertical (22a).
